# EUROPÄISCHE PATENTSCHRIFT

(11) **EP 2 177 291 B1**
(45) Veröffentlichungstag und Bekanntmachung des Hinweises auf die Patenterteilung: **15.04.2015**
(21) Anmeldenummer: 08018315.5
(22) Anmeldetag: 20.10.2008
(51) Int. Cl.: B21D 28/26, B21D 22/04

(54) **Verfahren zum schneidenden und/oder umformenden Bearbeiten von Werkstücken**
Method for cutting and/or forming of workpieces
Procédé de découpe et/ou formage de pièces

(43) Veröffentlichungstag der Anmeldung: 21.04.2010
(73) Patentinhaber: TRUMPF Werkzeugmaschinen GmbH + Co. KG, 71254 Ditzingen (DE)
(72) Erfinder: Büttner, Stefan, 87730 Bad Grönenbach (DE)
(74) Vertreter: Kohler Schmid Möbus Patentanwälte

(56) Entgegenhaltungen:
- DE-A1-102006 015 458
- FR-A- 2 803 782
- JP-A- 4 100 645
- JP-A- 10 323 722
- JP-A- 2004 216 416

## Beschreibung

Die vorliegende Erfindung betrifft ein Verfahren gemäß dem Oberbegriff des Anspruchs 1 zum schneidenden und/oder umformenden Bearbeiten von auf einer Werkstückauflage einer Werkzeugmaschine gelagerten, plattenartigen Werkstücken, vorzugsweise von Blechen, sowie ein Computerprogrammprodukt.

Solch ein Verfahren ist z.B. in der DE-A-102006 015 458 offenbart. Ein flexibles schneidendes und/oder umformendes Bearbeiten von Blechen kann mit

Hilfe von Stanz-Umformmaschinen vorgenommen werden. Diese Maschinen erlauben es, verschiedene Werkstückbearbeitungen an ein und derselben Werkzeugmaschine durchzuführen. Beispielsweise können Blechteile entlang ihrer Außenkontur aus dem Blechverbund freigeschnitten werden und an diesen zudem Umformungen vorgenommen werden. Eine solche Werkzeugmaschine stellt z.B. die von der Firma Trumpf Werkzeugmaschinen GmbH + Co. KG angebotene Stanzmaschine TruPunch^{®} 5000 dar, die Monowerkzeugaufnahmen besitzt, d.h. Werkzeugaufnahmen, an denen jeweils ein einzelnes Werkzeug, welches einen Werkzeugstempel und eine Werkzeugmatrize umfasst, gelagert wird. Weitere Werkzeuge können aus einem Werkzeugmagazin bedarfsabhängig in die Monowerkzeugaufnahmen eingewechselt werden.

Die Monowerkzeugaufnahmen weisen eine mittels eines hydraulischen Hubantriebs heb- und senkbare Werkzeugstempel-Aufnahme und eine feststehende Werkzeugmatrizen-Aufnahme auf. Zur Lagerung eines zu bearbeitenden Bleches dient ein Werkstücktisch. Eine Werkstückbearbeitung erfolgt, indem die Werkzeugstempel-Aufnahme mitsamt einem daran festgelegten Werkzeugstempel auf das auf dem Werkstücktisch gelagerte Blech abgesenkt wird und infolgedessen das Blech unter Beaufschlagung durch den Werkzeugstempel einerseits und die Werkzeugmatrize andererseits bearbeitet wird.

Hierbei tritt an Werkstücken, an denen zunächst eine stanzende Bearbeitung vorgenommen wird und die nachfolgend z.B. durch Rollformen in dem durch Stanzen bearbeiteten Bereich zusätzlich umgeformt werden sollen, das Problem auf, dass die bereits gestanzte Kontur sich durch das Umformen ggf. verändert, d.h. nicht mehr mit der ursprünglichen, beim Stanzen eingebrachten Kontur übereinstimmt. Eine kombinierte stanzende und umformende Bearbeitung an ein und demselben Teilbereich des Werkstücks kann daher auf die oben beschriebene Weise nicht mit der gewünschten Präzision erfolgen.

FR 2803782 A1 beschreibt ein Verfahren zum Formen einer Befestigungslasche an einer Metallplatte, bei dem die Metallplatte zunächst zur Ausbildung einer eine Sackbohrung bildenden Ausnehmung komprimiert und umgeformt wird. Der Boden der Sackbohrung bildet eine metallische Scheibe, die entfernt wird, um ein offenes Ende auszubilden. Zum Entfernen der metallischen Scheibe wird die Metallplatte von einer Umformstation an eine weitere Station bewegt.

DE 10 2006 015 458 A1 beschreibt eine Werkzeugeinrichtung, die an einem Industrieroboter festlegbar ist und mit diesem durch den Raum bewegbar ist, sowie ein Verfahren zum Umformen. Bei dem Verfahren wird an ein- und derselben Bearbeitungsstelle zunächst mittels eines Formstempels ein umgeformter Abschnitt in dem Werkstück erzeugt, um dann mittels eines in den Formstempel integrierten Stanzwerkzeugs ein Loch in den umgeformten Abschnitt einzubringen.

### Aufgabe der Erfindung

Es ist die Aufgabe der vorliegenden Erfindung, ein Verfahren zum Bearbeiten eines Werkstücks dahingehend weiterzubilden, dass ein umgeformtes Werkstück mit hoher Präzision bearbeitet werden kann.

### Gegenstand der Erfindung

Diese Aufgabe wird erfindungsgemäß gelöst durch ein Verfahren mit den Merkmalen des Patentanspruchs 1.

Durch das Bewegen der Werkzeugmatrize bzw. des Werkzeugstempels in eine Bearbeitungsposition oberhalb oder unterhalb der Auflageebene kann eine schneidende Bearbeitung auch an umgeformten, nach oben oder nach unten über die Auflageebene überstehenden Werkstückbereichen vorgenommen werden. Hierzu kann z.B. die Werkzeugmatrize so weit angehoben oder abgesenkt werden, bis eine Auflagefläche der Werkzeugmatrize die Unterseite der Umformung erreicht und den umgeformten Werkstückbereich während der Beaufschlagung mit dem Werkzeugstempel unterstützt. Hierbei kann zunächst die Werkzeugmatrize in der Bearbeitungsposition zugestellt werden, bevor der Werkzeugstempel auf den umgeformten Bereich des Werkstücks abgesenkt wird. Alternativ ist auch eine synchrone Bewegung von Werkzeugstempel und Werkzeugmatrize möglich, um das Werkstück an der Bearbeitungsposition zu bearbeiten. Die Lage der Bearbeitungsposition oberhalb bzw. unterhalb der Werkstückebene bzw. Auflageebene ist variabel und hängt davon ab, wie weit die am Werkstück gebildete Umformung bzw. der an dieser zu bearbeitende Bereich über die Werkstückebene übersteht.

Die Werkzeugmatrize ist in einer Werkzeugmatrizen-Aufnahme und der Werkzeugstempel ist in einer Werkzeugstempel-Aufnahme gelagert, die zum Bearbeiten des Werkstücks unabhängig voneinander entlang der Hubachse aufeinander zu bewegt werden. Durch die unabhängige Bewegung von Werkzeugstempel und Werkzeugmatrize mittels zweier unabhängiger Antriebe kann eine stanzende Bearbeitung oberhalb oder unterhalb der Werkstückebene vorgenommen werden, bei der z.B. zunächst die Werkzeugmatrize in der Bearbeitungsposition zugestellt und nachfolgend zum stanzenden Bearbeiten der Werkzeugstempel auf die Werkzeugmatrize abgesenkt wird, um das auf der Auflagefläche der Werkzeugmatrize aufliegende Werkstück zu bearbeiten.

In einem vorausgehenden Schritt wird die Umformung durch Rollumformen an dem auf der Werkstückauflage aufliegenden Werkstück gebildet. An einer Stanz-Umformmaschine kann an ein und demselben Werkstück zunächst eine Umformung vorgenommen werden und nachfolgend kann der umgeformte Bereich des Werkstücks wie oben beschrieben oberhalb oder unterhalb der Auflageebene bearbeitet werden. An dem umgeformten Bereich wird eine stanzende Bearbeitung vorgenommen.

In einer Variante werden zum Bewegen des Werkstücks entlang der Werkstückauflage der Werkzeugstempel und die Werkzeugmatrize in eine Ruheposition verbracht, in der die Werkzeugmatrize nicht nach oben und der Werkzeugstempel nicht nach unten über die Auflageebene übersteht. Da die Identifikation der beiden Werkzeugteile eines Werkzeugs als Werkzeugstempel bzw. Werkzeugmatrize über ihre Geometrie insbesondere bei Umformwerkzeugen nicht ohne weiteres vorgenommen werden kann, wird im Sinne dieser Anmeldung unter dem Werkzeugstempel ein Werkzeugteil verstanden, welches für die Bearbeitung wahlweise in einer ortsfesten Position verbleibt oder abgesenkt wird; die Werkzeugmatrize bezeichnet ein Werkzeugteil, welches bei der Bearbeitung ortsfest ist oder angehoben wird. Zum Positionieren eines zu bearbeitenden Bereichs des Werkstücks - im vorliegenden Fall an der Umformung - an eine Position an der Werkstückauflage, an der die Werkzeugmatrize und der Werkzeugstempel angeordnet sind, kann das Werkstück mittels einer Koordinatenführung entlang die Werkstückauflage bewegt werden. Um eine Kollision des Werkstücks mit der Werkzeugmatrize bzw. dem Werkzeugstempel bei dieser Bewegung zu verhindern, können diese in eine Ruheposition zurückgezogen werden, in der z.B. die Auflagefläche der Werkzeugmatrize bündig mit der Werkstückauflage abschließt oder bevorzugt unterhalb der Werkstückauflage angeordnet ist. Um die Bewegung des Werkstücks entlang der Werkstückauflage zu erleichtern, können an dieser beispielsweise Gleitrollen oder ein Borstenteppich vorgesehen sein.

Bei einer Variante umfasst das Verfahren zusätzlich: Auswählen eines für die Bearbeitung einer vorgegebenen Umformung geeigneten Werkzeugs aus einem Linearmagazin, sowie Festlegen des Werkzeugs an der Werkzeugstempel-Aufnahme und an der Werkzeugmatrizen-Aufnahme.

Bei einer weiteren bevorzugten Variante wird das Erreichen der Bearbeitungsposition durch den Werkzeugstempel und/oder die Werkzeugmatrize detektiert. Das Erreichen der Bearbeitungsposition, bei der die Werkzeugmatrize bzw. der Werkzeugstempel mit einer Bearbeitungsfläche, z.B. mit einer Auflagefläche der Werkzeugmatrize oder mit einer Schneidkante des Werkzeugstempels die Umformung berührt, kann hierbei möglichst präzise detektiert werden, um eine prozesssichere Bearbeitung des Werkstücks zu ermöglichen und insbesondere zu verhindern, dass das Werkstück durch den Werkzeugstempel ungewollt über die Bearbeitungsposition hinaus nach unten bewegt und dadurch ggf. zusätzlich verformt wird oder das Werkstück durch die Werkzeugmatrize teilweise von der Auflagefläche abgehoben wird. Die Detektion kann mit Hilfe einer Steuerungseinrichtung erfolgen, welche auf Daten über die an dem Werkstück vorgenommenen Umformungen, insbesondere über den Abstand der Unterseite des zu bearbeitenden Bereichs relativ zur Werkstückebene zurückgreifen kann. Zusätzlich oder alternativ können auch Sensoren, insbesondere Drucksensoren, kapazitive Sensoren, etc. vorgesehen sein, um das Erreichen der Bearbeitungsposition durch die Werkzeugmatrize bzw. den Werkzeugstempel zu überwachen.

Bei einer weiteren Variante steht die Umformung nach unten über die Auflageebene des Werkstücks über, wobei die Auflageebene durch die Oberseite eines an einem Bearbeitungstisch gebildeten Borstenteppichs gebildet wird, dessen Borsten nach unten umgebogen werden, um den erforderlichen Freiraum für die Umformung zu schaffen, wenn das Werkstück in der Auflageebene mittels einer Koordinatenführung verschoben wird.

In einer weiteren vorteilhaften Variante ist beim Bearbeiten des Werkstücks in der Bearbeitungsposition unterhalb der Auflageebene der Werkzeugschaft des Werkzeugstempels oberhalb der Auflageebene angeordnet. Der Werkzeugschaft, d.h. der Bereich des Werkzeugstempels, mit dem dieser in der Werkzeugstempel-Aufnahme gelagert ist, ist nach außen hin verbreitert, so dass dieser Bereich gegebenenfalls nicht in Eingriff mit klein dimensionierten Umformungen gebracht werden kann. Daher ist es günstig, wenn der Werkzeugstempel sich nur mit dem sich an den Werkzeugschaft anschließenden, eine geringere Breite aufweisenden Stanzstempel unter die Auflageebene erstreckt. Insbesondere kann an der Werkzeugmaschine mit Hilfe der Steuerungseinrichtung ein zur Bearbeitung einer vorgegebenen Umformung geeigneter Werkzeugstempel ausgewählt werden, dessen Stanzstempel eine Länge aufweist, die größer ist als der Abstand zwischen der Auflageebene und der jeweiligen Bearbeitungsposition unterhalb der Auflageebene, d.h. die Länge des Stanzstempels bzw. des Werkzeugstempels und die Bearbeitungsposition in Hubrichtung sind so aufeinander abgestimmt, dass der Werkzeugschaft bei der Bearbeitung oberhalb der Werkstückauflage verbleibt.

Die Aufgabe wird auch gelöst durch ein Computerprogrammprodukt, welches Codemittel aufweist, die zur Durchführung aller Schritte des oben beschriebenen Verfahrens ausgelegt sind. Ein zur Durchführung des Verfahrens ausgelegtes Bearbeitungsprogramm für ein Werkstück kann schon lange vor dem Bearbeiten des Werkstücks erstellt werden und erst unmittelbar vor dem Bearbeiten mittels eines computerlesbaren Mediums oder mittels einer anderen Form der Datenübertragung an eine Steuerungseinheit der Werkzeugmaschine übermittelt werden, die das Programm bei der Bearbeitung abarbeitet.

Das oben beschriebene Verfahren kann mittels einer nicht zur Erfindung gehörigen Werkzeugmaschine durchgeführt werden, die eine Steuerungseinheit aufweist, die ausgebildet / programmiert ist, zur Bearbeitung einer nach oben oder nach unten über eine Auflageebene an der Werkstückauflage überstehenden Umformung des Werkstücks den Werkzeugstempel sowie die Werkzeugmatrize entlang der Hubachse in eine Bearbeitungsposition oberhalb oder unterhalb der Auflageebene zu bewegen. Beim stanzenden Bearbeiten oberhalb oder unterhalb der Auflageebene bzw. Werkstückebene wird die Werkzeugmatrize in der Bearbeitungsposition in der Regel zunächst zugestellt und der Werkzeugstempel danach auf die ruhende Werkzeugmatrize abgesenkt. Alternativ ist es auch möglich, eine z.B. stanzende Bearbeitung vorzunehmen, indem die Werkzeugmatrize mit einer Hubbewegung von unten gegen den ruhenden Werkzeugstempel gedrückt wird oder indem sowohl der Werkzeugstempel als auch die Werkzeugmatrize gleichzeitig entlang der Hubachse aufeinander zu bewegt werden.

Eine solche Werkzeugmaschine kann weiterhin umfassen: eine Werkzeugstempel-Aufnahme zur Lagerung des Werkzeugstempels, eine Werkzeugmatrizen-Aufnahme zur Lagerung der Werkzeugmatrize, sowie einen Werkzeugantrieb, mittels dessen die Werkzeugstempel-Aufnahme und die Werkzeugmatrizen-Aufnahme entlang der Hubachse bewegbar sind. Der Werkzeugantrieb kann zwei getrennt voneinander ansteuerbare Antriebseinheiten für die Werkzeugstempel-Aufnahme bzw. die Werkzeugmatrizen-Aufnahme umfassen. Die Werkzeugstempel-Aufnahme sowie die Werkzeugmatrizen-Aufnahme können hierbei als Monowerkzeugaufnahmen ausgebildet sein, an denen wahlweise unterschiedliche Werkzeuge festgelegt bzw. gelagert werden können.

Die Werkzeugmatrize kann pyramiden- oder kegelstumpfförmig ausgebildet sein und weist an der Deckfläche eine Auflagefläche für das Werkstück auf. Eine solche Geometrie der Werkzeugmatrize ist günstig, um beim Anheben der Werkzeugmatrize über die Werkstückebene eine Kollision mit den Randbereichen der Umformung zu vermeiden, bevor die Werkzeugmatrize die Bearbeitungsposition erreicht. Die Werkzeugmatrize wird zu diesem Zweck höher als gewöhnliche Werkzeugmatrizen und mit kleinerer Auflagefläche ausgeführt, wobei sich die oben beschriebenen Geometrien als besonders vorteilhaft erwiesen haben. Es versteht sich, dass die Werkzeugmatrize auch eine andere, insbesondere asymmetrische Geometrie aufweisen kann und dass die Geometrie der Werkzeugmatrize an die Geometrie der zu bearbeitenden Umformung angepasst sein kann. Wird als Werkzeugmatrize eine Stanzmatrize verwendet, können an der Deckfläche eine oder mehrere Öffnungen zum Eingriff für einen Stanzstempel gebildet sein.

Die oben beschriebene Werkzeugmaschine kann eine Sensoreinheit zum Detektieren des Erreichens der Bearbeitungsposition durch den Werkzeugstempel und/oder durch die Werkzeugmatrize umfassen. Die Sensoreinheit kann über einen oder mehrere Drucksensoren, optische Sensoren, etc. verfügen. Auch kapazitive Sensoren zur Messung des Potentials zwischen Werkstück und Werkzeugmatrize bzw. Werkzeugstempel sind möglich. Die von den Sensoren gelieferten Messdaten können mit den Daten, welche in der Steuerungseinheit über die Art und Größe der Umformung hinterlegt sind, verglichen werden, bevor die Bearbeitung des Werkstücks durchgeführt wird.

Weitere Vorteile der Erfindung ergeben sich aus der Beschreibung und der Zeichnung. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fig. 1: eine schematische Darstellung einer Werkzeugmaschine zum schneidenden und/oder umformenden Bearbeiten von Werkstücken, und
- Fign. 2a-c: schematische Darstellungen von drei Schritten zum stanzenden Bearbeiten an einer Umformung nach oben an dem Werkstück von Fig. 1, und
- Fign. 3a-c: schematische Darstellungen von drei Schritten zum Bearbeiten einer Umformung nach unten an dem Werkstück von Fig. 1.

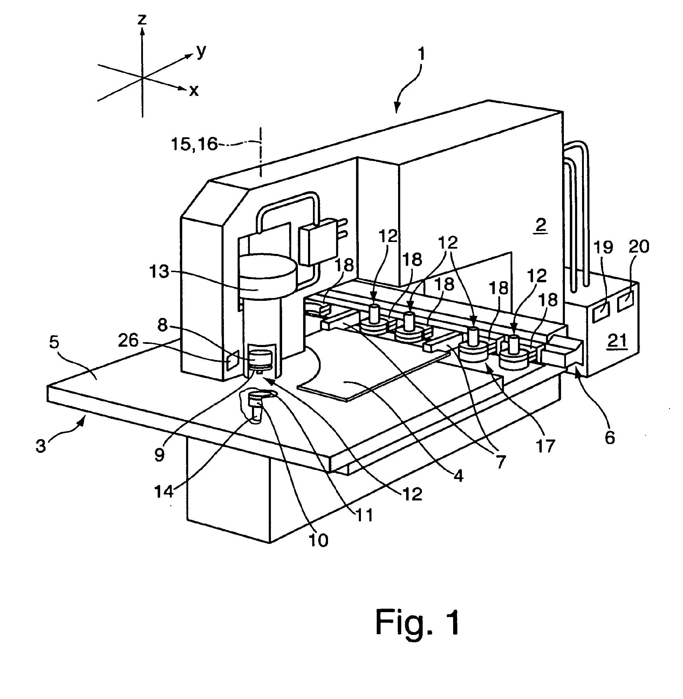

Fig. 1 zeigt eine Werkzeugmaschine 1 zum Schneiden und/oder Umformen von plattenartigen Werkstücken in Form einer Stanz-/Umformmaschine zum Bearbeiten von Blechen. Die Stanz-/Umformmaschine 1 weist ein C-förmiges Maschinengestell 2 auf, in dessen Rachenraum eine als Werkstücktisch 3 ausgebildete Werkstückauflage angeordnet ist, welche zur Lagerung eines zu bearbeitenden Werkstücks in Form eines Bleches 4 dient. An seiner Oberseite bildet der Werkstücktisch 3 eine horizontale Auflageebene 5 für das zu bearbeitende Blech 4, welche parallel zur x/y-Ebene des in Fig. 1 gezeigten Koordinatensystems verläuft. Mittels einer Koordinatenführung 6 ist das über Spannzangen 7 eingespannte Blech 4 in der Auflageebene 5 des Werkstücktisches 3 verschiebbar.

An dem vorderen Ende des oberen Schenkels des C-förmigen Maschinengestells 2 ist eine Werkzeugstempel-Aufnahme 8 angeordnet, in welcher ein Werkzeugstempel 9 gelagert ist. Weiterhin ist an dem vorderen Ende des unteren Schenkels des C-förmigen Maschinengestells 2 eine Werkzeugmatrizen-Aufnahme 10 vorgesehen, in der eine Werkzeugmatrize **11** gelagert ist. Der Werkzeugstempel 9 und die Werkzeugmatrize 11 bilden ein Werkzeug **12** zum trennenden und/oder umformenden Bearbeiten des Blechs **4**.

Eine Antriebseinheit der Stanz-/Umformmaschine 1 wird von einem Stempel-Antrieb **13** und einem Matrizen-Antrieb **14** in Form von Linearantrieben gebildet. Mittels des Stempel-Antriebs 13 ist die Werkzeugstempel-Aufnahme 8 mitsamt dem daran gelagerten bzw. festgelegten Werkzeugstempel 9 entlang einer Hubachse **15** gegenüber dem Werkstücktisch 3 heb- und senkbar. In vergleichbarer Weise ist die Werkzeugmatrizen-Aufnahme 10 mitsamt der darin gelagerten bzw. festgelegten Werkzeugmatrize 11 mittels des Matrizen-Antriebs 14 entlang der Hubachse 15 gegenüber dem Werkstücktisch 3 heb- und senkbar. Weiterhin sind die Werkzeugstempel-Aufnahme 8 und die Werkzeugmatrizen-Aufnahme 10 mittels eines nicht näher gezeigten Drehantriebs um eine mit der Hubachse 15 identische Werkzeugdrehachse 16 dreheinstellbar.

An der Koordinatenführung 6 ist ein Linearmagazin **17** mit weiteren Werkzeugen 12 vorgesehen. Die in dem Linearmagazin 17 befindlichen Werkzeuge 12 werden jeweils von einer Werkzeugkassette **18** gehalten und sind je nach Bedarf zur Bearbeitung des Blechs 4 an der Werkzeugstempel-Aufnahme 8 bzw. der Werkzeugmatrizen-Aufnahme 10 festlegbar.

Beim Werkzeugwechsel und bei der Werkstückbearbeitung werden sämtliche Antriebe der Stanz-Umformmaschine 1 mittels einer numerischen Steuereinheit **21** gesteuert. Die numerische Steuereinheit 21 umfasst insbesondere Speichermittel **19** zum Speichern von Werkzeugdaten und zudem Steuermittel **20**, um sowohl die Heb-, Senk- und Drehbewegungen der Werkzeugstempel-Aufnahme 8 als auch die Heb-, Senk- und Drehbewegungen der Werkzeugmatrizen-Aufnahme 10 basierend auf den gespeicherten Daten über das Werkstück 4 bzw. das Werkzeug 12 zu bemessen und zu steuern.

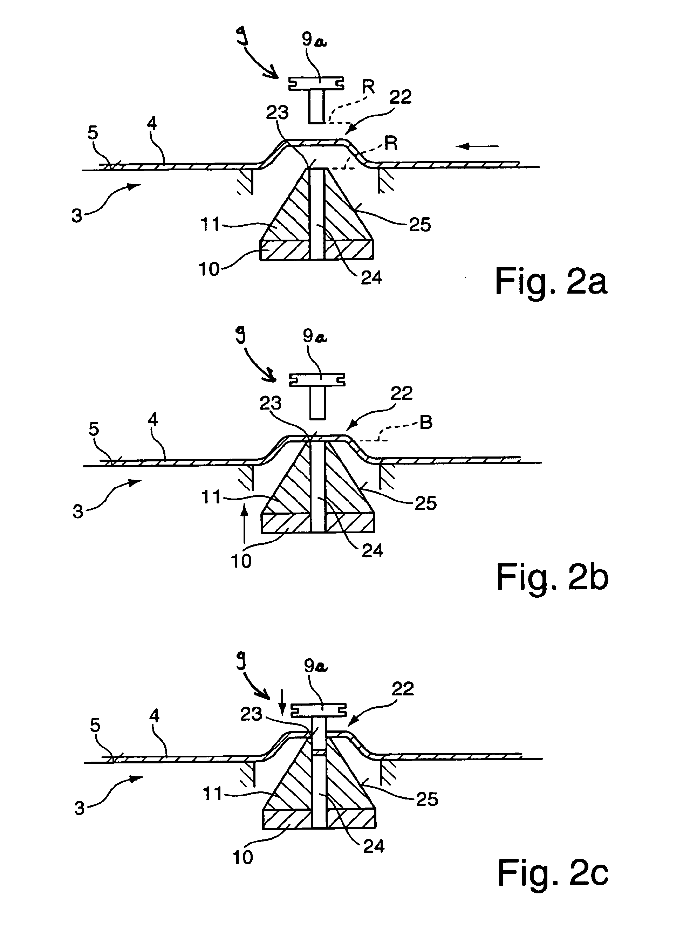

Im Folgenden wird anhand der **Fign. 2a****-c** der Vorgang des stanzenden Bearbeitens des Werkstücks **4** an einer nach oben über die Auflageebene 5 überstehenden, sickenförmigen Umformung **22** beschrieben. Die Umformung 22 wurde an dem Werkstück **4** in einem vorausgehenden Schritt durch Rollformen mittels eines Umformwerkzeugs gebildet, das nachfolgend wie oben dargestellt gegen das in Fign. 2a-c gezeigte Stanzwerkzeug 9, 11 ausgetauscht wurde.

Wie in Fig. 2a durch einen Pfeil angedeutet ist, wird das Werkstück 4 für das stanzende Bearbeiten zunächst mittels der Koordinatenführung 6 in der Auflageebene 5 des Werkstücktisches 3 verschoben, bis der stanzend zu bearbeitende Bereich der Umformung 22 über der Stanzmatrize 11 positioniert ist. Während dieser Bewegung befindet sich die pyramiden- oder kegelförmig ausgebildete Stanzmatrize 11 in einer Ruheposition **R** in Z-Richtung (Schwerkraftrichtung), in der eine an der Deckfläche der Stanzmatrize 11 gebildete Auflagefläche **23** bündig mit der Werkstückebene 5 abschließt. Auch der Werkzeugstempel 9 nimmt hierbei eine Ruheposition R oberhalb der Werkstückauflage 5 ein.

Wie in Fig. 2b gezeigt ist, wird nachfolgend die Stanzmatrize 11 angehoben, bis diese eine Bearbeitungsposition **B** in Z-Richtung erreicht, an der die Auflagefläche 23 der Stanzmatrize 11 die Unterseite eines zu bearbeitenden, ebenen Bereichs an der Umformung 22 erreicht. Die Werkzeugmatrize 11 wird hierbei von der Steuereinrichtung 21 in der Bearbeitungsposition B zugestellt, d.h. die Bewegung entlang der Hubachse 15 wird gestoppt, sobald die Auflagefläche 23 die Unterseite der Umformung 22 erreicht hat. Das Erreichen der Bearbeitungsposition B durch die Stanzmatrize 11 bzw. die Auflagefläche 23 kann in einer Sensoreinheit **26** der Werkzeugmaschine (vgl. Fig. 1) z.B. über Drucksensoren oder optische Sensoren ermittelt werden, es ist aber auch möglich, dass die Steuerungseinheit 21 anhand der über die Umformung des Werkstücks 4 bekannten Daten den zum Erreichen der Bearbeitungsposition B erforderlichen Hub der Werkzeugmatrize 11 ohne Zuhilfenahme von Sensoren festlegt.

Wie in Fig. 2b ebenfalls zu erkennen, ist die Stanzmatrize 11 hierbei so auf die Geometrie der Umformung 22 abgestimmt, dass diese über die Werkstückebene 3 angehoben werden kann, ohne dass es hierbei zu einer Kollision mit dem Werkstück 4 kommt, bevor die Stanzmatrize 11 die Bearbeitungsposition B erreicht hat. Zu diesem Zweck sind sowohl die Größe der Auflagefläche 23 als auch der Winkel, den eine Mantelfläche **25** der Stanzmatrize 11 mit der Auflagefläche 23 bzw. der Blechebene 5 einschließt (im vorliegenden Fall ca. 45°, typischer Weise zwischen ca. 20° und ca. 80°) so gewählt, dass die Mantelfläche 25 der Stanzmatrize 11 nicht mit den Randbereichen der Umformung 22 kollidieren kann, bevor die Auflagefläche 23 den zu bearbeitenden Bereich der Umformung 22 erreicht. Ein für die Bearbeitung einer vorgegebenen Umformung 22 geeignetes Werkzeug 12 wird hierbei von der Steuerungseinheit 21 aus dem Linearmagazin 17 ausgewählt und wie oben beschrieben in der Werkzeugmatrizen-Aufnahme 10 bzw. der Werkzeugstempel-Aufnahme 8 festgelegt.

An dem in der Bearbeitungsposition B auf der Auflagefläche 23 aufliegenden Bereich der Umformung 22 wird nachfolgend eine stanzende Bearbeitung durchgeführt, indem der Stempel 9 auf die Stanzmatrize 11 abgesenkt wird und hierbei mit einer an der Auflagefläche 23 vorgesehenen Öffnung **24** in Eingriff gebracht wird, vgl. Fig. 2c. Nach dem stanzenden Bearbeiten, bei dem der Stempel 9 das Werkstück 4 auch mit mehreren Stanzhüben bearbeiten kann, kann die Stanzmatrize 11 wieder in die in Fig. 2a gezeigte Ruheposition R verbracht werden, um das Werkstück 4 an einer anderen Stelle zu bearbeiten.

Es versteht sich, dass die Stanzmatrize 11 nicht zwingend in der Bearbeitungsposition B zugestellt werden muss, sondern dass insbesondere für den Fall, dass weitere Umformungen nach oben oder unten an dem zu bearbeitenden Bereich vorgenommen werden sollen, die Werkzeugmatrize 11 angehoben und gleichzeitig der Werkzeugstempel 9 abgesenkt werden kann, um das Werkstück 4 oberhalb der Werkstückauflage 3 umzuformen.

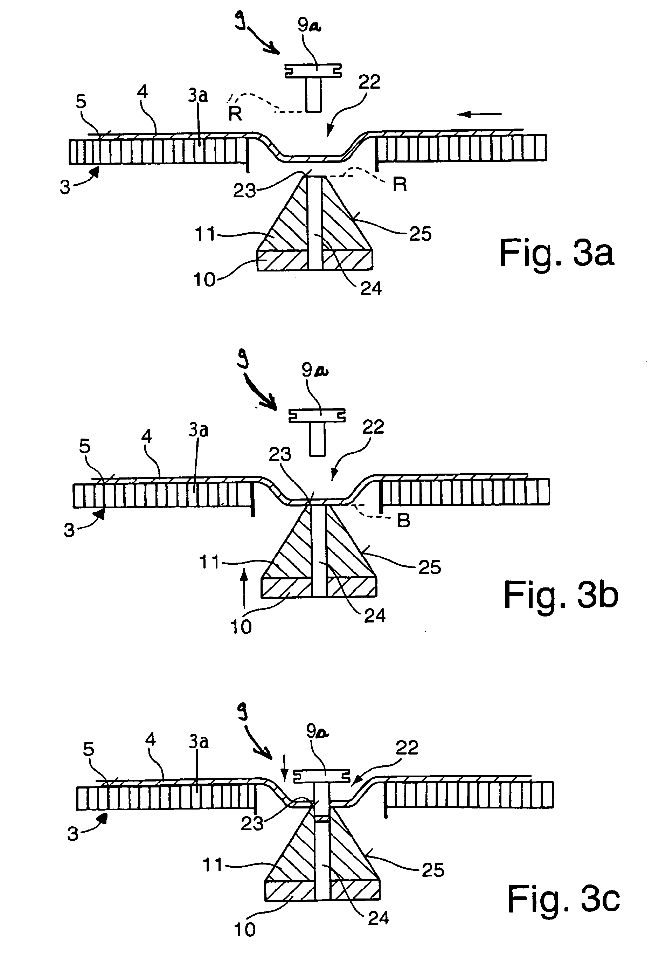

In **Fign. 3a****-c** ist ein Bearbeitungsprozess an einem Werkstück **4** gezeigt, bei dem die Umformung im Gegensatz zum in Fign. 2a-c gezeigten Werkstück 4 nicht nach oben, sondern nach unten über die Auflageebene 5 des Werkstücks 4 übersteht. In diesem Fall wird die Auflageebene 5 des Werkstücks **4** durch die Oberseite eines an dem Bearbeitungstisch 3 gebildeten Borstenteppichs **3a** gebildet, dessen Borsten nach unten umgebogen werden, um den erforderlichen Freiraum für die Umformung 22 zu schaffen, wenn das Werkstück 4 in der Auflageebene 5 mittels der Koordinatenführung 6 verschoben wird. Ansonsten läuft der Bearbeitungsprozess analog zum in Fign. 2a-c beschriebenen Bearbeitungsprozess ab, mit dem Unterschied, dass die Bearbeitungsposition B sich nicht oberhalb, sonder unterhalb der Auflageebene 5 in der Werkstückauflage 3 befindet, so dass der Stempel 9 zum Bearbeiten der Umformung 22 unter die Auflageebene 5 verbracht werden muss. Hierbei verbleibt der Stempelschaft 9a, mit dem dieser an der Werkzeugstempel-Aufnahme 8 (vgl. Fig. 1) gelagert wird, oberhalb der Auflageebene 5, um den Eingriff des an dem Stempel 9 gebildeten Stanzstempels bzw. von dessen Schneidkante in die Umformung 22 zu ermöglichen, ohne dass der Stempelschaft 9a als Störkontur wirkt.

Es versteht sich, dass neben den in Fign. 2a-c bzw. Fig. 3a-c gezeigten Umformungen in Form einer Sicke, wie sie typischer Weise durch Rollformen erzeugt werden, auch andere, z.B. kiemenförmige Umformungen mittels geeigneter Umformwerkzeuge an dem Werkstück 4 vorgenommen werden können. Auch solche Umformungen können auf die oben beschriebene Weise oberhalb oder unterhalb der Werkstückebene 5 bearbeitet werden. Insgesamt kann auf die oben beschriebene Weise eine stanzende und/oder umformende Bearbeitung auch in nach oben oder nach unten umgeformten Teilbereichen eines Werkstücks mit hoher Präzision erfolgen. Es versteht sich, dass hierbei ggf. auch die Rolle von Stempel 9 und Matrize 11 im Vergleich zur in Fign. 2a-c bzw. Fign. 3a-c gezeigten Anordnung vertauscht sein kann, d.h. der Stempel 9 ist unterhalb, die Matrize 11 oberhalb der Auflageebene 5 angeordnet.

## Patentansprüche

1. Verfahren zum schneidenden und/oder umformenden Bearbeiten von auf einer Werkstückauflage (3) einer Werkzeugmaschine (1) gelagerten, plattenartigen Werkstücken (4), vorzugsweise von Blechen, umfassend:
Bearbeiten des Werkstücks (4) durch Bewegen eines Werkzeugstempels (9) und einer Werkzeugmatrize (11), die ein Werkzeug (12) zum trennenden und/oder umformenden Bearbeiten bilden, entlang einer Hubachse (15) in eine Bearbeitungsposition (B) oberhalb oder unterhalb einer Auflageebene (5) an der Werkstückauflage (3), um das Werkstück (4) an einer nach oben oder nach unten über die Auflageebene (5) überstehenden sickenförmigen Umformung (22) stanzend zu bearbeiten, wobei die Werkzeugmatrize (11) in einer Werkzeugmatrizen-Aufnahme (10) und der Werkzeugstempel (9) in einer Werkzeugstempel-Aufnahme (8) gelagert sind, die zum Bearbeiten des Werkstücks (4) unabhängig voneinander entlang der Hubachse (15) aufeinander zu bewegt werden, wobei die Werkzeugmatrizen-Aufnahme (10) und die Werkzeugstempel-Aufnahme (8) als Werkzeugaufnahmen ausgebildet sind, an denen wahlweise unterschiedliche Werkzeuge (12) festgelegt werden können, **dadurch gekennzeichnet, dass** in einem vorausgehenden Schritt die sickenförmige Umformung (22) durch Rollumformen mittels eines Umformwerkzeugs an dem auf der Werkstückauflage (3) aufliegenden Werkstück (4) gebildet wird, und wobei vor dem stanzenden Bearbeiten des Werkstücks (4) an der Umformung (22) das Umformwerkzeug gegen das Werkzeug (12) ausgetauscht wird.

2. Verfahren nach Anspruch 1, bei dem zum Bewegen des Werkstücks (4) entlang der Werkstückauflage (3) der Werkzeugstempel (9) und die Werkzeugmatrize (11) in eine Ruheposition (R) verbracht werden, in der die Werkzeugmatrize (11) nicht nach oben und der Werkzeugstempel (9) nicht nach unten über die Auflageebene (5) übersteht.

3. Verfahren nach einem der vorhergehenden Ansprüche, bei dem das Verfahren weiter umfasst:
Auswählen eines für die Bearbeitung einer vorgegebenen Umformung geeigneten Werkzeugs (12) aus einem Linearmagazin (17), sowie Festlegen des Werkzeugs (12) an der Werkzeugstempel-Aufnahme (8) und an der Werkzeugmatrizen-Aufnahme (10).

4. Verfahren nach einem der vorhergehenden Ansprüche, bei dem das Erreichen der Bearbeitungsposition (B) durch den Werkzeugstempel (9) und/oder die Werkzeugmatrize (11) detektiert wird.

5. Verfahren nach einem der vorhergehenden Ansprüche, bei dem die Umformung (22) nach unten über die Auflageebene (5) des Werkstücks (4) übersteht, wobei die Auflageebene (5) durch die Oberseite eines an einem Bearbeitungstisch (3) gebildeten Borstenteppichs (3a) gebildet wird, dessen Borsten nach unten umgebogen werden, um den erforderlichen Freiraum für die Umformung (22) zu schaffen, wenn das Werkstück (4) in der Auflageebene (5) mittels einer Koordinatenführung (6) verschoben wird.

6. Verfahren nach einem der vorhergehenden Ansprüche, bei dem beim Bearbeiten des Werkstücks (4) in der Bearbeitungsposition (B) unterhalb der Auflageebene (5) der Werkzeugschaft (9a) des Werkzeugstempels (9) oberhalb der Auflageebene (5) angeordnet ist.

7. Computerprogrammprodukt, welches Codemittel aufweist, die zur Durchführung aller Schritte des Verfahrens nach einem der Ansprüche 1 bis 6 angepasst sind.

## Claims

1. A method for processing plate-like workpieces (4), preferably metal sheets, supported on a workpiece support (3) of a machine tool (1) by cutting and/or forming, comprising:
processing the workpiece (4) by moving a tool punch (9) and a tool die (11), which form a tool (12) for processing by separating and/or forming, along a stroke axis (15) into a processing position (B) above or below a support plane (5) on the workpiece support (3) in order to process the workpiece (4) by punching at a crimp-shaped formed shape (22) projecting upwards or downwards beyond the support plane (5), wherein the tool die (11) is supported in a tool die holder (10) and the tool punch (9) is supported in a tool punch holder (8), which holders are moved towards each other along the stroke axis (15) independently of each other for processing of the workpiece (4), wherein the tool die holder (10) and the tool punch holder (8) are designed as tool holders to which different tools (12) can selectively be fixed, **characterized in that** in a previous step, the crimp-shaped formed shape (22) is made in the workpiece (4) resting on the workpiece support (3) by roll-forming using a forming tool and wherein, prior to processing of the workpiece (4) by punching on the formed shape (22), the forming tool is exchanged with the tool (12).

2. A method according to claim 1, in which, for movement of the workpiece (4) along the workpiece support (3), the tool punch (9) and the tool die (11) are taken to a home position (R) in which the tool die (11) does not project upwards and the tool punch (9) does not project downwards beyond the support plane (5).

3. A method according to any one of the preceding claims, wherein the method further comprises:
selecting a tool (12) that is suited for processing a predetermined formed shape from a linear magazine (17) and fixing the tool (12) to the tool punch holder (8) and to the tool die holder (10).

4. A method according to any one of the preceding claims, in which the attainment of the processing position (B) by the tool punch (9) and/or the tool die (11) is detected.

5. A method according to any one of the preceding claims, in which the formed shape (22) projects downwards beyond the support plane (5) of the tool (4), wherein the support plane (5) is formed by the upper side of a bristle carpet (3a) formed on a processing table (3), the bristles of which are bent downwards in order to provide the required free space for the formed shape (22) when the workpiece (4) is displaced in the support plane (5) by means of a coordinate guidance (6).

6. A method according to any one of the preceding claims, in which, when the workpiece (4) is being processed in the processing position (B) below the support plane (5), the tool shank (9a) of the tool punch (9) is disposed above the support plane (5).

7. A computer program product which has code means adapted to perform all steps of the method according to any one of claims 1 to 6.

## Revendications

1. Procédé d'usinage coupant et/ou par formage de pièces (4) du genre plaques, de préférence de tôles, montées sur un support de pièce (3) d'une machine-outil ( 1), comprenant :
usinage de la pièce (4) par déplacement d'un poinçon d'outil (9) et d'une matrice d'outil (11), qui forment un outil (12) pour l'usinage par séparation et/ou par formage, le long d'un axe de levée (15) dans une position d'usinage (B) au-dessus ou en dessous d'un plan d'appui (5) sur le support de pièce (3), afin d'usiner la pièce (4) par découpage au niveau d'une conformation (22) en forme de moulure qui dépasse du plan d'appui (5) vers le haut ou vers le bas, sachant que la matrice d'outil (11) est montée dans un support (10) de matrice d'outil et que le poinçon d'outil (9) est monté dans un support (8) de poinçon d'outil, supports qui, pour l'usinage de la pièce (4), peuvent être rapprochés l'un de l'autre indépendamment l'un de l'autre le long de l'axe de levée (15), sachant que le support (10) de matrice d'outil et le support (8) de poinçon d'outil sont réalisés sous la forme de porte-outils sur lesquels peuvent être fixés au choix différents outils (12),
**caractérisé en ce que**, au cours d'une étape précédente, la conformation (22) en forme de moulure est formée par roulage au moyen d'un outil de formage sur la pièce (4) posée sur le support de pièce (3), sachant qu'avant l'usinage par découpage de la pièce (4) au niveau de la conformation (22), l'outil de formage est remplacé par l'outil (12).

2. Procédé selon la revendication 1, selon lequel, afin de déplacer la pièce (4) le long du support de pièce (3), le poinçon d'outil (9) et la matrice d'outil (11) sont amenés dans une position de repos (R) dans laquelle la matrice d'outil (11) ne dépasse pas du plan d'appui (5) vers le haut et le poinçon d'outil (9) ne dépasse pas du plan d'appui (5) vers le bas.

3. Procédé selon l'une des revendications précédentes, selon lequel le procédé comprend en outre :
sélection dans un magasin linéaire (17) d'un outil (12) approprié pour l'usinage d'une conformation prédéfinie, et fixation de l'outil (12) sur le support (8) de poinçon d'outil et sur le support (10) de matrice d'outil.

4. Procédé selon l'une des revendications précédentes, selon lequel l'atteinte de la position d'usinage (B) par le poinçon d'outil (9) et/ou par la matrice d'outil (11) est détectée.

5. Procédé selon l'une des revendications précédentes, selon lequel la conformation (22) dépasse du plan d'appui (5) de la pièce (4) vers le bas, sachant que le plan d'appui (5) est formé par le côté supérieur d'un tapis à crins (3a) qui est formé sur un plateau d'usinage (3) et dont les crins sont recourbés vers le bas afin de créer l'espace libre nécessaire pour la conformation (22) lorsque la pièce (4) est déplacée dans le plan d'appui (5) au moyen d'un système de guidage (6) par coordonnées cartésiennes.

6. Procédé selon l'une des revendications précédentes, selon lequel, lors de l'usinage de la pièce (4) dans la position d'usinage (B) en dessous du plan d'appui (5), la queue d'outil (9a) du poinçon d'outil (9) est disposée au-dessus du plan d'appui (5).

7. Produit programme informatique, qui présente des moyens de codage qui sont adaptés pour la mise en oeuvre de toutes les étapes du procédé selon l'une des revendications 1 à 6.
